# EUROPEAN PATENT SPECIFICATION

(11) **EP 3 771 932 B1**
(45) Date of publication and mention of the grant of the patent: **19.08.2026**
(21) Application number: 20189269.2
(22) Date of filing: 03.08.2020
(51) Int. Cl.: G02B 6/02, G02B 6/028, G02B 6/036

(54) **CUT-OFF SHIFTED OPTICAL FIBER WITH LARGE EFFECTIVE AREA**
CUT-OFF-VERSETZTE OPTISCHE FASER MIT GROSSER EFFEKTIVER FLÄCHE
FIBRE OPTIQUE DÉCALÉE PAR COUPURE DISPOSANT D'UNE LARGE ZONE EFFECTIVE

(30) Priority: 02.08.2019 IN 201921031253
(43) Date of publication of application: 03.02.2021
(73) Proprietor: Sterlite Technologies Limited, 431 136 Maharashtra (IN)
(72) Inventor: Malaviya, Apeksha, 431 136 Maharashtra (IN); Reddy, Srinivas, 431 136 Maharashtra (IN); Lanke, MalleshwaraRao, 431 136 Maharashtra (IN); Kumar Pandey, Anand, 431 136 Maharashtra (IN)
(74) Representative: Valet Patent Services Limited

(56) References cited:
- EP-A1- 2 211 212
- EP-A1- 2 352 046
- EP-A1- 2 402 799
- EP-B1- 2 211 212
- CN-A- 109 839 694
- NL-B1- 2 019 817
- US-A1- 2011 188 826
- US-B1- 7 929 818

## Description

### Field of the Invention

The present disclosure relates to the field of optical fiber. Particularly, the present disclosure relates to a cutoff shifted optical fiber with high mode field diameter.

### Background of the invention

With the advancement of science and technology, various modern technologies are being employed for communication purposes. One of the most important modern communication technologies is optical fiber communication technology using a variety of optical fibers. Optical fiber is used to transmit information as light pulses from one end to another. The telecommunication industry is continuously striving for designs to achieve high optical signal to noise ratio and low losses. The ongoing research suggests that the optical fiber of G.654.E category is an improved version of G.654.B and an alternative to G.652.D that faces challenges in 400G transmission in territorial long haul communication due to non-linear effects. In addition, major challenges in 400G long haul communication are due to non-linear effects, low optical signal to noise ratio and high attenuation. attenuation. A prior art NL2019817B1 relates to single mode optical fibers having a chlorine doped cores and a cladding having an offset trench region surrounding the core.

In light of the above stated discussion, there is a need for an optical fiber that overcomes the above cited drawbacks.

### SUMMARY OF THE INVENTION

The invention provides an optical fiber according to claim 1. Different embodiments are set out in the dependent claims.

The optical fiber has a cable cutoff wavelength up to 1530 nanometer. Also, the optical fiber has attenuation of up to 0.17 dB/km at a wavelength of about 1550 nanometer. The optical fiber has a mode field diameter in range of about 12 micrometer to 13 micrometer. Also, the optical fiber has chromatic dispersion in range of about 17 picosecond per nanometer-kilometer to 23 picosecond per nanometer kilometer at wavelength of about 1550 nanometer. Also, the optical fiber has an effective area in range of about 110 micrometer square to 135 micrometer square. The optical fiber has macrobend loss up to 0.1 decibel per 100 turns corresponding to wavelength of 1625 nanometer at bending radius of about 30 millimeter and macrobend loss up to 0.03 decibel per 100 turns corresponding to wavelength of 1550 nanometer at bending radius of about 30 millimeter.

A primary object of the present disclosure is to provide an optical fiber with low loss.

Another object of the present disclosure is to provide the optical fiber with large mode field diameter.

### BRIEF DESCRIPTION OF DRAWING

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
FIG. 1 illustrates a cross sectional view of an optical fiber, in accordance with an embodiment of the present disclosure;

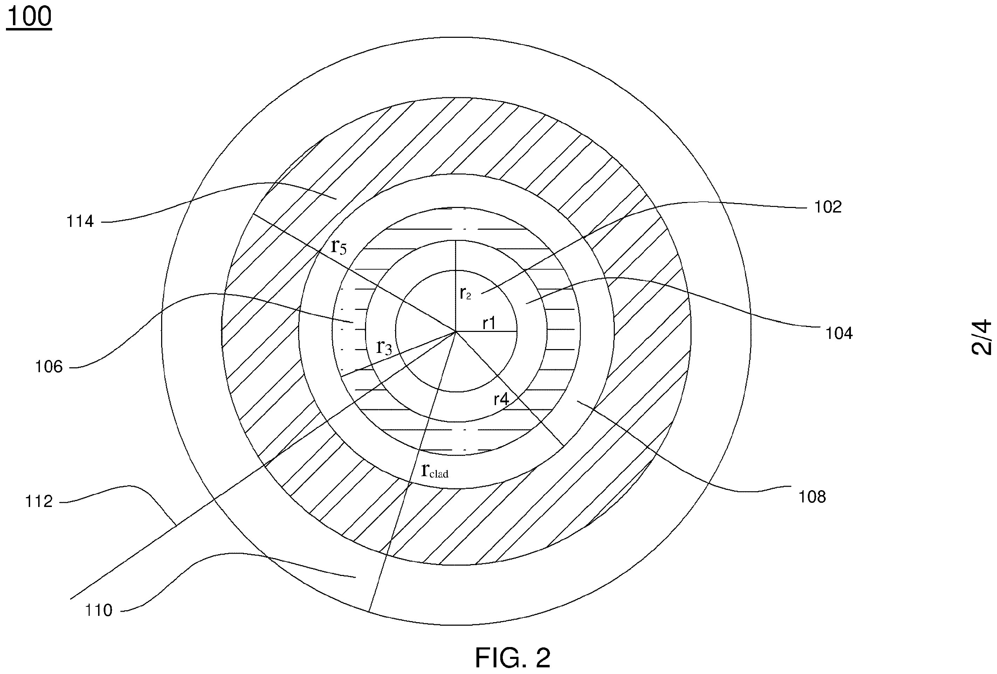

FIG. 2 illustrates a cross sectional view of the optical fiber, in accordance with another embodiment of the present disclosure;
FIG. 3 illustrates an example of graph between refractive index and radius of the optical fiber, in accordance with an embodiment of the present disclosure; and
FIG. 4 illustrates another example of graph between refractive index and radius of the optical fiber, in accordance with another embodiment of the present disclosure.

It should be noted that the accompanying figures are intended to present illustrations of exemplary embodiments of the present disclosure. These figures are not intended to limit the scope of the present disclosure. It should also be noted that accompanying figures are not necessarily drawn to scale.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference in this specification to "one embodiment" or "an embodiment" means that a particular feature, structure, or characteristic described in connection with the embodiment is included in at least one embodiment of the present technology. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Reference will now be made in detail to selected embodiments of the present disclosure in conjunction with accompanying figures. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

Moreover, although the following description contains many specifics for the purposes of illustration, anyone skilled in the art will appreciate that many variations and/or alterations to said details are within the scope of the present technology. Similarly, although many of the features of the present technology are described in terms of each other, or in conjunction with each other, one skilled in the art will appreciate that many of these features can be provided independently of other features. Accordingly, this description of the present technology is set forth without any loss of generality to, and without imposing limitations upon, the present technology.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced item.

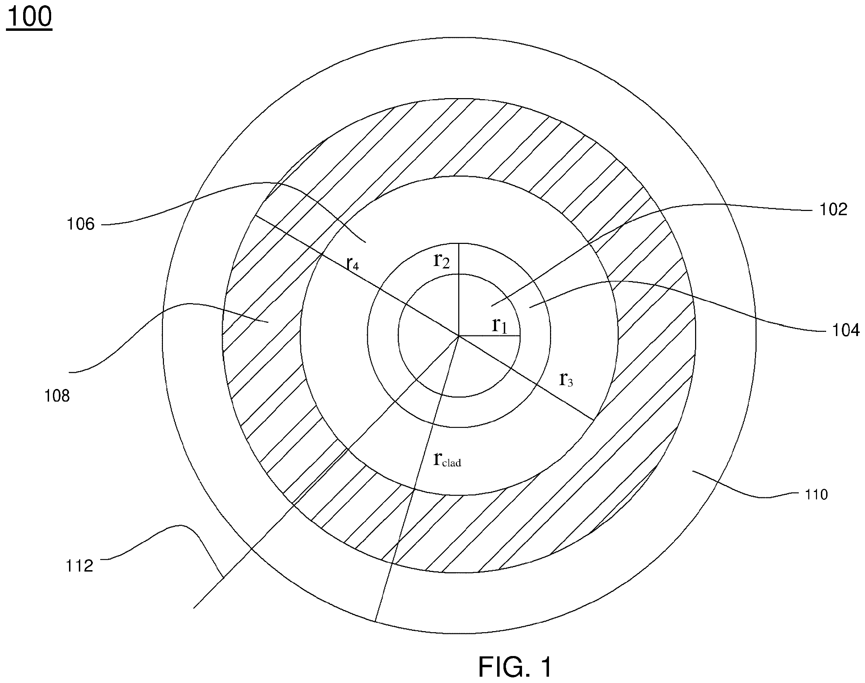

FIG. 1 illustrates a cross-sectional view of an optical fiber 100, in accordance with various embodiments of the present disclosure. In general, optical fiber is a thin strand of glass or plastic capable of transmitting optical signals. In an embodiment of the present disclosure, the optical fiber 100 is configured to transmit information over long distances with high optical signal to noise ratio, low non-linear effects, low latency and low attenuation. The optical fiber 100 of the present disclosure is fully compliant with the requirements of ITU (International Telecommunication Union-Telecommunication Standardization Sector)-G.654 E standards.

The bendable optical fibre cable 100 includes a plurality of buffer tubes, one or more ribbon stacks, an inner layer, an outer sheath and a plurality of strength members. In addition, the bendable optical fibre cable 100 includes one or more water swell-able yarns and a plurality of ripcords.

In an embodiment of the present disclosure, the optical fiber includes a core region 102. The core region 102 is associated with refractive index profile. The refractive index profile provides relation between refractive index and radius of the optical fiber 102. Moreover, the refractive index of the optical fiber 100 changes with an increase in radius. Further, refractive index profile is modified based on regulation of a plurality of parameters. The plurality of parameters includes but may not be limited to curve parameter alpha, relative refractive index delta and radius. The core region 102 has a curve parameter α1. In general, the curve parameter alpha indicates shape of refractive index profile. The core region 102 has the curve parameter α1 in range of about 6 to 9. In an embodiment of the present disclosure, value of the curve parameter α1 of the core region 102 may vary. In an example, the core region 102 has the curve parameter α1 of about 8. The core region 102 is defined along a central longitudinal axis 112 of the optical fiber 100. In general, longitudinal axis is an imaginary axis passing through center of the optical fiber.

The core region 102 has a relative refractive index Δ1. The relative refractive index Δ1 of the core region 102 is in range of about 0 to 0.13. In an embodiment of the present disclosure, the relative refractive index Δ1 of the core region 102 may vary. In an example, the relative refractive index Δ1 of the core region 102 is 0.12.

The core region 102 has a first radius r1. The core region 102 has the first radius r1 in range of about 4.7 micrometer to 5.1 micrometer. In an embodiment of the present disclosure, the first radius r1 of the core region 102 may vary. In an example, the core region 102 has the first radius r1 of about 4.9 micrometer.

The optical fiber 100 includes a buffer clad region 104. The buffer clad region 104 separates the core region 102 and the primary trench region 106. The buffer clad region 104 has a relative refractive index Δ2. The buffer clad region 104 has the relative refractive index Δ2 in range of about -0.05 to 0.05. In an embodiment of the present disclosure, the relative refractive index Δ2 of the buffer clad region 104may vary. The buffer clad region 104 has a radius r2. The radius r2 of the buffer clad region 104 is in range of about 6 micrometer to 6.4 micrometer. In an embodiment of the present disclosure, the radius r2 of the buffer clad region 104 may vary. In an example, the buffer clad region 104 has the radius r2 of about 6.2 micrometer.

The optical fiber 100 includes the primary trench region 106. The primary trench region 106 has a radius r3. The radius r3 of the primary trench region 106 is in range of about 11 micrometer to 13 micrometer. In an embodiment of the present disclosure, the radius r3 of the primary trench region 106 region may vary. In an example, the primary trench region 106 has the radius r3 of about 12 micrometer.

The primary trench region 106 has a relative refractive index Δ3. The relative refractive index Δ3 of the primary trench region 106 is in range of about -0.28 to -0.32. In an embodiment of the present disclosure, the relative refractive index Δ3 of the primary trench region 106 may vary. In an example, The relative refractive index Δ3 of the primary trench region 106 is about -0.3. The relative refractive index Δ3 of the primary trench region 106 indicates relative refractive index difference represented by percentage.

The primary trench region 106 has a curve parameter αtrench-1. The curve parameter αtrench-1 of theprimarytrench region 106 is in range of about 5 to 7. In an embodiment of the present disclosure, the curve parameter αtrench-1 ofthe primary trench region 106 may vary. In an example, the curve parameter αtrench-1 of the primary trench region 106 is about 6.

The optical fiber 100 includes a secondary trench region 108. The secondary trench region 108 is adjacent to the primary trench region 106. The secondary trench region 108 has a radius r4. The secondary trench region 108 has the radius r4 in range of about 23 micrometer to 28 micrometer. In an embodiment of the present disclosure, the radius r4 of the secondary trench region 108 may vary. In an example, the secondary trench region 108 has the radius r4 of about 25 micrometer.

The secondary trench region 108 has a relative refractive index Δ4. The relative refractive index Δ4 is in range of about -0.41 to -0.45. In an embodiment of the present disclosure, the relative refractive index Δ4 of the secondary trench region 108 may vary. In an example, the secondary trench region 108 has the relative refractive index Δ4 of about -0.43. In an embodiment of the present disclosure, the relative refractive index Δ4 of the secondary trench region 108 is greater than The relative refractive index Δ3of the primary trench region 106.

The secondary trench region 108 has a curve parameter αtrench-2. The secondary trench region 108 has the curve parameter αtrench-2 in range of about 6 to 9. In an embodiment of the present disclosure, the curve parameter αtrench-2 of the secondary trench region 108 may vary. In an example, the secondary trench region 108 has curve parameter αtrench-2 in range of about 8.

The first optical fiber 100 includes a cladding region 110. The cladding region 110 has a radius rclad. The cladding region 110 has the radius rclad of up to 62.5 micrometer. In an embodiment of the present disclosure, the radius rclad of the cladding region 110 may vary. The cladding region 110 has a relative refractive index Δclad. The relative refractive index Δclad of the cladding region 110 is of about 0.

The optical fiber 100 has a mode field diameter. The optical fiber 100 has a mode field diameter in range of about 12 micrometer to 13 micrometer at wavelength of about 1550 nanometer. In an embodiment of the present disclosure, the mode field diameter of the optical fiber 100 at wavelength of about 1550 nanometer may vary. In an example, the optical fiber 100 has the mode field diameter of about 12.2 micrometer at wavelength of about 1550 nanometer. In an embodiment, the optical fiber 100 has attenuation of up to 0.17 dB/km at a wavelength of about 1550 nanometer. The optical fiber 100 has chromatic dispersion in range of about 17 picosecond per nanometer-kilometer to 23 picosecond per nanometer-kilometer at a wavelength of about 1550 nanometer. In an embodiment of the present disclosure, chromatic dispersion of the optical fiber 100 at a wavelength of about 1550 nanometer may vary. In an example, the optical fiber 100 has chromatic dispersion of about 21.5 picosecond per nanometer-kilometer. The optical fiber 100 has chromatic dispersion of up to 29 picosecond per nanometer-kilometer at a wavelength of about 1625 nanometer. In an embodiment of the present disclosure, chromatic dispersion of the optical fiber 100 at a wavelength of about 1625 nanometer may vary. In an example, the optical fiber 100 has chromatic dispersion of about 26 picosecond per nanometer-kilometer at a wavelength of about 1625 nanometer.

The optical fiber 100 has a cable cutoff wavelength up to 1530 nanometer. In an embodiment of the present disclosure, cable cutoff wavelength of the optical fiber 100 may vary. In an example, the optical fiber 100 has the cable cutoff wavelength of about 1480 nanometer. The optical fiber 100 has macrobend loss up to 0.1 decibel per 100 turns corresponding to wavelength of 1625 nanometer at bending radius of about 30 millimeter and macrobend loss up to 0.03 decibel per 100 turns corresponding to wavelength of 1550 nanometer at bending radius of about 30 millimeter. In an example, the optical fiber 100 has the macrobend loss of about 0.01 decibel per 100 turns corresponding to wavelength of 1550 nanometer at bending radius of about 30 millimeter. In an example, the optical fiber 100 has the macrobend loss of about 0.045 decibel per 100 turns corresponding to wavelength of 1625 nanometer at bending radius of about 30 millimeter.

In an embodiment of the present disclosure, the optical fiber 100 is used for 400G long haul applications. In another embodiment of the present disclosure, the optical fiber 100 is utilized for other applications. In an embodiment of the present disclosure, the optical fiber 100 complies with specific telecommunication standards. The telecommunication standards are defined by the International Telecommunication Union-Telecommunication (hereinafter "ITU-T"). In an embodiment of the present disclosure, the optical fiber 100 is compliant with G.654E recommendation standard set by the ITU-T.

The optical fiber 100 includes the core region 102. In an embodiment of the present disclosure, the core region 102 has the radius r1 in range of about 5.5 micrometer to 5.9 micrometer. In another embodiment of the present disclosure, the radius r1 of the core region 102 may vary. In an example, the radius r1 of the core region 102 is of about 5.7 micrometer. The core region 102 has the curve parameter α1. In general, curve parameter alpha indicates shape of refractive index profile. In an embodiment of the present disclosure, the core region 102 has the curve parameter α1 in range of about 5 to 7. In another embodiment of the present disclosure, the curve parameter α1 of the core region 102 may vary. In an example, the core region 102 has the curve parameter α1 of about 6.

The core region 102 has the relative refractive index Δ1.In an embodiment of the present disclosure, the relative refractive index Δ1 is in range of about 0 to 0.1. In another embodiment of the present disclosure, the relative refractive index Δ1 of the core region 102 may vary. In an example, the relative refractive index Δ1 is of about 0.1.

The optical fiber 100 includes the buffer clad region 104. The buffer clad region 104 separates the core region 102 and the primary trench region 106. The buffer clad region 104 has the relative refractive index Δ2. The buffer clad region 104 has the relative refractive index Δ2 in range of about 0. In an embodiment of the present disclosure, the relative refractive index Δ2 of the buffer clad region 104may vary. The buffer clad region 104 has the radius r2 in range of about 7.3 micrometer to 7.7 micrometer. In another embodiment of the present disclosure, the radius r2 of the buffer clad region 104 may vary. In an example, the buffer clad region 104 has the radius r2 of about 7.5 micrometer.

The optical fiber 100 includes the primary trench region 106. The primary trench region 106 has the radius r3. The radius r3 of the primary trench region 106 is in range of about 10 micrometer to 14 micrometer. In an embodiment of the present disclosure, the radius r3 of the primary trench region 106 may vary. In an example, the primary trench region 106 has the radius r3 of about 12 micrometer.

The primary trench region 106 has a relative refractive index Δ3. The relative refractive index Δ3 of the primary trench region 106 is in range of about -0.28 to -0.32. In an embodiment of the present disclosure, the relative refractive index Δ3 of the primary trench region 106 may vary. In an example, the relative refractive index Δ3 of the primary trench region 106 is about -0.3.

The primary trench region 106 has a curve parameter αtrench-1. The curve parameter αtrench-1 of the primary trench region 106 is in range of about 5 to 7. In an embodiment of the present disclosure, the curve parameter αtrench-1 ofthe primary trench region 106 may vary. In an example, the curve parameter αtrench-1 of the primary trench region 106 is about 6.

The optical fiber 100 includes the secondary trench region 108. The secondary trench region 108 is adjacent to the primary trench region 106. The secondary trench region 108 has a radius r4. The secondary trench region 108 has the radius r4 in range of about 16 micrometer to 20 micrometer. In an embodiment of the present disclosure, the radius r4 of the secondary trench region 108 may vary. In an example, the secondary trench region 108 has the radius r4 of about 18 micrometer.

The secondary trench region 108 has a relative refractive index Δ4. The relative refractive index Δ4 is in range of about -0.42 to -0.48. In an embodiment of the present disclosure, the relative refractive index Δ4of the secondary trench region 108 may vary. In an example, the secondary trench region 108 has the relative refractive index Δ4 of about -0.45. In an embodiment of the present disclosure, the relative refractive index Δ4 of the secondary trench region 108 is greater than The relative refractive index Δ3of the primary trench region 106.

The secondary trench region 108 has the curve parameter alpha αtrench-2. The secondary trench region 108 has the curve parameter alpha αtrench-2 in range of about 7 to 9. In an embodiment of the present disclosure, the curve parameter alpha αtrench-2 of the secondary trench region 108 may vary. In an example, the secondary trench region 108 has the curve parameter alpha αtrench-2 in range of about 8.

The optical fiber 100 includes the third trench region 114. The third trench region 114 is adjacent to the secondary trench region 108. The third trench region 114 has a radius r5. The third trench region 114 has the radius r5 in range of about 38 micrometer to 42 micrometer. In an embodiment of the present disclosure, the radius r5 of the third trench region 114 may vary. In an example, the third trench region 114 has the radius r5 of about 40 micrometer.

The third trench region 114 has a relative refractive index Δ5. The relative refractive index Δ5 is in range of about -0.1 to -0.15. In an embodiment of the present disclosure, the relative refractive index Δ5 of the third trench region 114 may vary. In an example, the third trench region 114 has The relative refractive index Δ5 of about -0.13.

The optical fiber 100 includes the cladding region 110. The cladding region 110 has the radius rclad. The cladding region 110 has the radius rclad of up to 62.5 micrometer. In an embodiment of the present disclosure, the radius rclad of the cladding region 110 may vary. The cladding region 110 has a relative refractive index Δclad. The relative refractive index Δclad of the cladding region 110 is of about 0.

The optical fiber 100 has a mode field diameter. The optical fiber 100 has a mode field diameter in range of about 12 micrometer to 13 micrometer at wavelength of about 1550 nanometer. In an embodiment of the present disclosure, the mode field diameter of the optical fiber 100 at wavelength of about 1550 nanometer may vary. In an embodiment, the optical fiber 100 has attenuation of up to 0.17 dB/km at a wavelength of about 1550 nanometer. In an example, the optical fiber 100 has the mode field diameter of about 12.7 micrometer at wavelength of about 1550. The optical fiber 100 has chromatic dispersion in range of about 17 picosecond per nanometer-kilometer to 23 picosecond per nanometer-kilometer at wavelength of about 1550 nanometer. In an embodiment of the present disclosure, chromatic dispersion of the optical fiber 100 at wavelength of about 1550 nanometer may vary. In an example, the optical fiber 100 has chromatic dispersion of about 22.3 picosecond per nanometer-kilometer. The optical fiber 100 has chromatic dispersion of up to 29 picosecond per nanometer-kilometer at wavelength of about 1625 nanometer. In an embodiment of the present disclosure, chromatic dispersion of the optical fiber 100 at wavelength of about 1625 nanometer may vary. In an example, the optical fiber 100 has chromatic dispersion of about 26.8 picosecond per nanometer-kilometer at wavelength of about 1625 nanometer.

The optical fiber 100 has a cable cutoff wavelength up to 1530 nanometer. In an embodiment of the present disclosure, cable cutoff wavelength of the optical fiber 100 may vary. In an example, the optical fiber 100 has the cable cutoff wavelength of about 1425 nanometer. The optical fiber 100 has macrobend loss up to 0.1 decibel per 100 turns corresponding to wavelength of 1625 nanometer at bending radius of about 30 millimeter and macrobend loss up to 0.03 decibel per 100 turns corresponding to wavelength of 1550 nanometer at bending radius of about 30 millimeter. In an example, the optical fiber 100 has the macrobend loss of about 0.015 decibel per 100 turns corresponding to wavelength of 1550 nanometer at bending radius of about 30 millimeter. In an example, the optical fiber 100 has the macrobend loss of about 0.06 decibel per 100 turns corresponding to wavelength of 1625 nanometer at bending radius of about 30 millimeter.

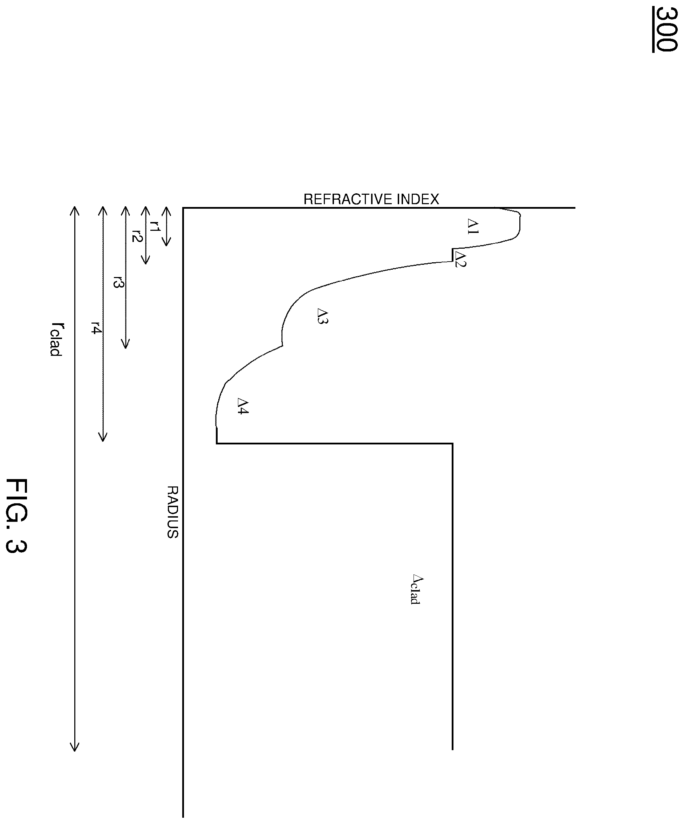

FIG.3 illustrates an example of a graph 300 between refractive index and radius of the optical fiber 100, in accordance with an embodiment of the present disclosure. The core region 102 is associated with refractive index profile. In an embodiment of the present disclosure, refractive index profile provides the relation between refractive index and radius of the optical fiber 100. In addition, radius of the core region 102 is in range of about 4.7 micrometer to 5.1 micrometer. Furthermore, the graph 300 illustrates relation between refractive index and radius of the core region 102. Moreover, the refractive index of the optical fiber 100 changes with an increase in radius of the optical fiber 100. Further, refractive index profile is modified based on regulation of a plurality of parameters. The plurality of parameters includes but may not be limited to curve parameter alpha, relative refractive index delta and radius. The curve parameter alpha is a non-dimensional parameter that is indicative of the shape of refractive index profile. The refractive index profile and relative refractive index of the optical fiber is given by the following equations: $Δ i = 100 x \frac{\left[{n}_{i}^{2}-{n}_{clad}^{2}\right]}{2 {n}_{i}^{2}}$ index profile is given by: $n \left(r\right) = {n}_{max} {\left[1-2Δ1{\left(\frac{r}{R 1}\right)}^{α}\right]}^{0.5} for r \leq R 1$ $n \left(r\right) = {n}_{clad} for R 1 \leq r < R 2 and r \geq R 4$ $n \left(r\right) = {n}_{clad} - {n}_{trench} {\left[1+2Δ3{\left(\frac{\left(R3-r\right)}{\left(R3-R2\right)}\right)}^{{α}_{trench -} 1}\right]}^{0.5} for R 2 \leq r < R 3$ $n \left(r\right) = {n}_{trench _ 1} - {n}_{trench _ 2} {\left[1+2Δ4{\left(\frac{\left(R4-r\right)}{\left(R4-R3\right)}\right)}^{{α}_{trench _ 2}}\right]}^{0.5} for R 3 \leq r < R 4$

The term "relative refractive index" as used herein is defined as $Δi% = 100 \times \left[{ni}^{2}-{n}^{2}\right] / 2 {ni}^{2} ,$ where nᵢ is the maximum refractive index in region i of an optical fiber unless otherwise specified, and n is the average refractive index of an undoped region of the optical fiber. As used herein, the values of the relative refractive index are given in units of "%", unless otherwise specified.

Region 1 is core region and is the maximum refractive, i = 1 2 3 nmax index of the core region. Region 2 is buffer clad region and is the refractive index nclad of the pure silica. Region 3 is primary trench region, is the minimum refractive ntrench_1 index of the primary trench region. Region 4 is second trench region and is the ntrench_2 minimum refractive index of the second trench region.

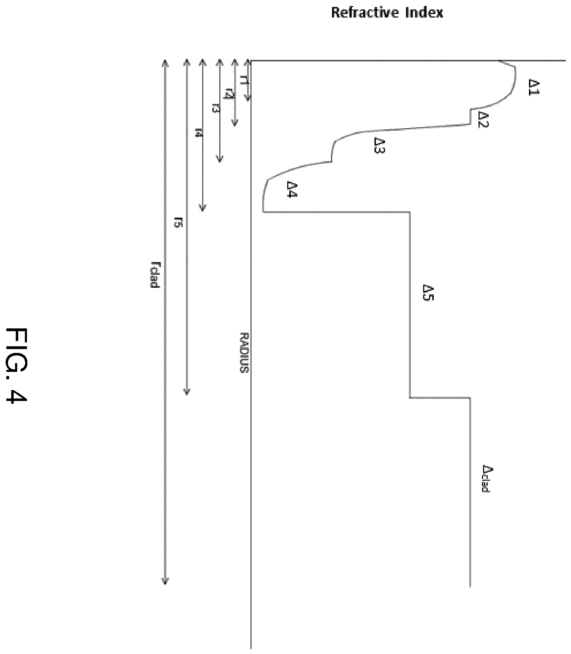

FIG.4 illustrates another example of a graph 400 between refractive index and radius of the core region 102 of the optical fiber 100, in accordance with another embodiment of the present disclosure. The core region 102 is associated with refractive index profile. In an embodiment of the present disclosure, refractive index profile provides relation between refractive index and radius of the optical fiber 100. In an embodiment of the present disclosure, the radius r1 of the core region 102 has a value of about 5.7 micrometer. In another embodiment of the present disclosure, the radius r1 of the core region 102 may vary. Furthermore, the graph 400 illustrates relation between refractive index and radius of the fiber. Moreover, the refractive index of the optical fiber 100 changes with an increase in radius of the optical fiber 100. Further, refractive index profile is modified based on regulation of a plurality of parameters. The plurality of parameters includes but may not be limited to curve parameter alpha, relative refractive index delta and radius. The curve parameter alpha is a non-dimensional parameter that is indicative of shape of refractive index profile. The refractive index profile of the optical fiber 100 is given by: $n \left(r\right) = {n}_{max} {\left[1-2Δ1{\left(\frac{r}{R 1}\right)}^{α}\right]}^{0.5} for r \leq R 1$ $n \left(r\right) = {n}_{clad} for R 1 \leq r < R 2 and r \geq R 5$ $n \left(r\right) = {n}_{clad} - {n}_{trench} {\left[1+2Δ3{\left(\frac{\left(R3-r\right)}{\left(R3-R2\right)}\right)}^{{α}_{trench -} 1}\right]}^{0.5} for R 2 \leq r < R 3$ $n \left(r\right) = {n}_{trench _ 1} - {n}_{trench _ 2} {\left[1+2Δ4{\left(\frac{\left(R4-r\right)}{\left(R4-R3\right)}\right)}^{{α}_{trench _ 2}}\right]}^{0.5} for R 3 \leq r < R 4$ $n \left(r\right) = {n}_{trench _ 2} - {n}_{trench _ 3} {\left[1+2Δ5{\left(\frac{\left(R5-r\right)}{\left(R5-R4\right)}\right)}^{{α}_{trench _ 3}}\right]}^{0.5} for R 4 \leq r < R 5$

Region 1 is core region and is the maximum refractive index of the core region. nmax Region 2 is buffer clad region and is the refractive index of the pure silica. nclad Region 3 is primary trench region, is the minimum refractive index of the ntrench_1 primary trench region. Region 4 is second trench region and is the minimum n trench_2 refractive index of the second trench region. Region 5 is third trench region and ntrench_3 is the minimum refractive index of the third trench region.

The present disclosure provides numerous advantages over the prior art. The present disclosure provides the first optical fiber having the plurality of optical characteristics well below the standard limit recommended by ITU-T. The present disclosure provides the optical fiber with low attenuation, large mode field diameter and low latency. In addition, the present disclosure provides the optical fiber possessing high optical signal to noise ratio along with improved characteristics of optical fiber following the ITU-T G.654E recommendations. Furthermore, the characteristics of the first optical fiber have reduced non-linear effects. In addition, the characteristics of the first optical fiber include but may not be limited to lower attenuation, low latency, large effective area, zero dispersion.

The foregoing descriptions of specific embodiments of the present technology have been presented for purposes of illustration and description. They are not intended to be exhaustive or to limit the present technology to the precise forms disclosed, and obviously many modifications and variations are possible in light of the above teachings. The embodiments were chosen and described in order to best explain the principles of the present technology and its practical application, to thereby enable others skilled in the art to best utilize the present technology and various embodiments with various modifications as are suited to the particular use contemplated.

## Claims

1. An optical fiber (100) comprising:
a core region (102), a primary trench region (106), and,
a secondary trench region (108) adjacent to the primary trench region (106),
wherein the core region (102) has a radius r1, wherein the core region (102) has a relative refractive index Δ1, wherein the relative refractive index Δ1 is in a range of 0 to 0.13,
the primary trench region (106) has a relative refractive index Δ3, wherein the primary trench region (106) has a curve parameter αtrench-1; and
the secondary trench region (108) has a relative refractive index Δ4, wherein the secondary trench region (108) has a curve paramete αtrench-2;
**characterised in that**
a buffer clad region (104) separates the core region and the primary trench region; and
wherein the buffer clad region has a relative refractive index Δ2 in a range of -0.05 to 0.05.

2. An optical fiber (100) as claimed in claim 1, wherein the buffer clad region (104) has a radius r2 wherein the radius r2 is in range of 6 micrometer to 6.4 micrometer.

3. An optical fiber (100) as claimed in claim 1, wherein the buffer clad region (104) has a radius r2 wherein the radius r2 is in range of 7.3 micrometer to 7.7 micrometer.

4. An optical fiber (100) as claimed in claim 1, wherein the core region (102) is defined by one or more of a curve parameter α1in range of 6 to 9, the radius r1 in range of 4.7 micrometer to 5.1 micrometer, the relative refractive index Δ3 of the primary trench region (106) is in range of -0.28 to -0.32, the relative refractive index Δ4 of the secondary trench region (108) is in range of -0.41 to -0.45, a radius r3 of the primary trench region (106) in range of 11 micrometer to 13 micrometer, a radius r4 of the secondary trench region (108) in range of 23 micrometer to 28 micrometer.

5. An optical fiber (100) as claimed in claim 1, wherein the core region (102) is defined by one or more of a curve parameter α1in range of 5 to 7, the radius r1 of the core region (102) in range of 5.5 micrometer to 5.9 micrometer, the relative refractive index Δ3 of the primary trench region (106) in range of -0.28 to -0.32, the relative refractive index Δ4 of the secondary trench region (108) in range of -0.42 to -0.48, a radius r3 of the primary trench region (106) in range of 10 micrometer to 14 micrometer, a radius r4 of the secondary trench region (108) in range of 16 micrometer to 20 micrometer.

6. An optical fiber (100) as claimed in claim 1, wherein the relative refractive index Δ4 of the secondary trench region (108) is greater than the relative refractive index Δ3 of the primary trench region (106).

7. An optical fiber (100) as claimed in claim 1, wherein the optical fiber (100) has a cable cutoff wavelength up to 1530 nanometer, wherein the optical fiber (100) has a mode field diameter in range of 12 micrometer to 13 micrometer, wherein the optical fiber (100) has attenuation of up to 0.17 dB/km at a wavelength of 1550 nanometer, wherein the optical fiber (100) has chromatic dispersion in range of 17 picosecond per nanometer-kilometer to 23 picosecond per nanometer-kilometer at wavelength of 1550 nanometer, wherein the optical fiber (100) has an effective area in range of 110 micrometer square to 135 micrometer square, wherein the optical fiber (100) has macrobend loss up to 0.1 decibel per 100 turns corresponding to wavelength of 1625 nanometer at bending radius of 30 millimeter and macrobend loss up to 0.03 decibel per 100 turns corresponding to wavelength of 1550 nanometer at bending radius of 30 millimeter.

8. An optical fiber (100) as claimed in claim 1, wherein the core region (102) is defined along a central longitudinal axis (112) of the optical fiber (100).

9. An optical fiber (100) as claimed in claim 1, further comprising a third trench region (114), wherein the third trench region (114) is adjacent to the secondary trench region (108), wherein the third trench region (114) has a radius r5, wherein the radius r5 of the third trench region (114) is in range of 38 micrometer to 42 micrometer.

10. An optical fiber (100) as claimed in claim 1, further comprising a cladding region (110), wherein the cladding region (110) has a radius rclad, wherein the radius rclad of the cladding region (110) is up to 62.5 micrometer, wherein the cladding region (110) has a relative refractive index Δclad of 0.

## Patentansprüche

1. Glasfaser (100), umfassend:
einen Kernbereich (102), einen primären Grabenbereich (106) und
einen benachbarten sekundären Grabenbereich (108) gegenüber dem primären Grabenbereich (106), wobei der Kernbereich (102) einen Radius r1 aufweist, wobei der Kernbereich (102) einen relativen Brechungsindex Δ1 aufweist, wobei der relative Brechungsindex Δ1 in einem Bereich von 0 bis 0,13 liegt,
der primäre Grabenbereich (106) einen relativen Brechungsindex Δ3 aufweist, wobei der primäre Grabenbereich (106) einen Krümmungsparameter αtrench-1 aufweist; und
der sekundäre Grabenbereich (108) einen relativen Brechungsindex Δ4 aufweist, wobei der sekundäre Grabenbereich (108) einen Krümmungsparameter αtrench-2 aufweist;
**dadurch gekennzeichnet, dass**
ein Puffer-Mantelbereich (104) den Kernbereich und den primären Grabenbereich trennt; und
wobei der Puffer-Mantelbereich einen relativen Brechungsindex Δ2 im Bereich von -0,05 bis 0,05 aufweist.

2. Glasfaser (100) nach Anspruch 1, wobei die Puffer-Mantel-Region (104) einen Radius r2 aufweist, wobei der Radius r2 im Bereich von 6 Mikrometern bis 6,4 Mikrometern liegt.

3. Glasfaser (100) nach Anspruch 1, wobei die Puffer-Mantel-Region (104) einen Radius r2 aufweist, wobei der Radius r2 im Bereich von 7,3 Mikrometern bis 7,7 Mikrometern liegt.

4. Glasfaser (100) nach Anspruch 1, wobei der Kernbereich (102) durch einen oder mehrere der folgenden Parameter definiert ist: einen Kurvenparameter a im Bereich von 6 bis 9, den Radius r1 im Bereich von 4,7 Mikrometer bis 5,1 Mikrometer, der relative Brechungsindex Δ3 des primären Grabenbereichs (106) liegt im Bereich von -0,28 bis -0,32, der relative Brechungsindex Δ4 des sekundären Grabenbereichs (108) liegt im Bereich von -0,41 bis -0,45, der Radius r3 des primären Grabenbereichs (106) im Bereich von 11 Mikrometer bis 13 Mikrometer liegt, der Radius r4 des sekundären Grabenbereichs (108) im Bereich von 23 Mikrometer bis 28 Mikrometer liegt.

5. Glasfaser (100) nach Anspruch 1, wobei der Kernbereich (102) durch einen oder mehrere der folgenden Parameter definiert ist: einen Kurvenparameter a im Bereich von 5 bis 7, einen Radius r1 des Kernbereichs (102) im Bereich von 5,5 Mikrometer bis 5,9 Mikrometer, der relative Brechungsindex Δ3 der primären Grabenregion (106) im Bereich von -0,28 bis -0,32, der relative Brechungsindex Δ4 der sekundären Grabenregion (108) im Bereich von -0,42 bis -0,48, ein Radius r3 des primären Grabenbereichs (106) im Bereich von 10 Mikrometer bis 14 Mikrometer, ein Radius r4 des sekundären Grabenbereichs (108) im Bereich von 16 Mikrometer bis 20 Mikrometer.

6. Glasfaser (100) nach Anspruch 1, wobei der relative Brechungsindex Δ4 des sekundären Grabenbereichs (108) größer ist als der relative Brechungsindex Δ3 des primären Grabenbereichs (106).

7. Glasfaser (100) nach Anspruch 1, wobei die Glasfaser (100) eine Kabelgrenzwellenlänge von bis zu 1530 Nanometern aufweist, wobei die optische Faser (100) einen Modenfelddurchmesser im Bereich von 12 Mikrometern bis 13 Mikrometern aufweist, wobei die optische Faser (100) eine Dämpfung von bis zu 0,17 dB/km bei einer Wellenlänge von 1550 Nanometern aufweist, wobei die optische Faser (100) eine chromatische Dispersion im Bereich von 17 Pikosekunden pro Nanometer-Kilometer bis 23 Pikosekunden pro Nanometer-Kilometer bei einer Wellenlänge von 1550 Nanometern aufweist, wobei die optische Faser (100) eine effektive Fläche im Bereich von 110 Mikrometer² bis 135 Mikrometer² aufweist, wobei die optische Faser (100) einen Makrobiegungsverlust von bis zu 0,1 Dezibel pro 100 Windungen aufweist, entsprechend einer Wellenlänge von 1625 Nanometern bei einem Biegeradius von 30 Millimetern, sowie einen Makrobiegungsverlust von bis zu 0,03 Dezibel pro 100 Windungen, entsprechend einer Wellenlänge von 1550 Nanometern bei einem Biegeradius von 30 Millimetern.

8. Glasfaser (100) nach Anspruch 1, wobei der Kernbereich (102) entlang einer zentralen Längsachse (112) der Glasfaser (100) definiert ist.

9. Glasfaser (100) nach Anspruch 1, die weiter einen dritten Grabenbereich (114) umfasst, wobei der dritte Grabenbereich (114) dem sekundären Grabenbereich (108) benachbart ist, wobei der dritte Grabenbereich (114) einen Radius r5 aufweist, wobei der Radius r5 des dritten Grabenbereichs (114) im Bereich von 38 Mikrometern bis 42 Mikrometern liegt.

10. Eine Glasfaser (100) nach Anspruch 1, die weiter einen Mantelbereich (110) umfasst, wobei der Mantelbereich (110) einen Radius rclad aufweist, wobei der Radius rclad des Mantelbereichs (110) bis zu 62,5 Mikrometer beträgt, wobei der Mantelbereich (110) einen relativen Brechungsindex Δclad von 0 aufweist.

## Revendications

1. Fibre optique (100) comprenant :
une région d'âme (102), une région de tranchée primaire (106), et,
une région de tranchée secondaire (108) adjacente à la région de tranchée primaire (106),
dans laquelle la région d'âme (102) présente un rayon r1, dans laquelle la région d'âme (102) présente un indice de réfraction relatif Δ1, dans laquelle l'indice de réfraction relatif Δ1 est dans la plage allant de 0 à 0,13 ;
la région de tranchée primaire (106) présente un indice de réfraction relatif Δ3, dans laquelle la région de tranchée primaire (106) présente un paramètre de courbe αtrench-1 ; et
la région de tranchée secondaire (108) présente un indice de réfraction relatif Δ4, dans laquelle la région de tranchée secondaire (108) présente un paramètre de courbe αtrench-2 ;
**caractérisée en ce qu'**une région de gaine tampon (104) sépare la région d'âme et la région de tranchée primaire ; et
dans laquelle la région de gaine tampon présente un indice de réfraction relatif Δ2 dans une plage allant de -0,05 à 0,05.

2. Fibre optique (100) selon la revendication 1, dans laquelle la région de gaine tampon (104) présente un rayon r2 dans laquelle le rayon r2 est dans la plage allant de 6 micromètres à 6,4 micromètres.

3. Fibre optique (100) selon la revendication 1, dans laquelle la région de gaine tampon (104) présente un rayon r2 dans laquelle le rayon r2 est dans la plage allant de 7,3 micromètres à 7,7 micromètres.

4. Fibre optique (100) selon la revendication 1, dans laquelle la région d'âme (102) est définie par un ou plusieurs parmi un paramètre de courbe α1 dans la plage allant de 6 à 9, le rayon r1 dans la plage allant de 4,7 micromètres à 5,1 micromètres, l'indice de réfraction relatif Δ3 de la région de tranchée primaire (106) est dans la plage allant de -0,28 à -0,32, l'indice de réfraction relatif Δ4 de la région de tranchée secondaire (108) est dans la plage allant de -0,41 à - 0,45, un rayon r3 de la région de tranchée primaire (106) dans la plage allant de 11 micromètres à 13 micromètres, un rayon r4 de la région de tranchée secondaire (108) dans la plage allant de 23 micromètres à 28 micromètres.

5. Fibre optique (100) selon la revendication 1, dans laquelle la région d'âme (102) est définie par un ou plusieurs parmi un paramètre de courbe α1 dans la plage allant de 5 à 7, le rayon r1 de la région d'âme (102) dans la plage allant de 5,5 micromètres à 5,9 micromètres, l'indice de réfraction relatif Δ3 de la région de tranchée primaire (106) dans la plage allant de - 0,28 à -0,32, l'indice de réfraction relatif Δ4 de la région de tranchée secondaire (108) dans la plage allant de -0,42 à -0,48, un rayon r3 de la région de tranchée primaire (106) dans la plage allant de 10 micromètres à 14 micromètres, un rayon r4 de la région de tranchée secondaire (108) dans la plage allant de 16 micromètres à 20 micromètres.

6. Fibre optique (100) selon la revendication 1, dans laquelle l'indice de réfraction relatif Δ4 de la région de tranchée secondaire (108) est supérieur à l'indice de réfraction relatif Δ3 de la région de tranchée primaire (106).

7. Fibre optique (100) selon la revendication 1, dans laquelle la fibre optique (100) présente une longueur d'onde de coupure de câble allant jusqu'à 1,530 nanomètres, dans laquelle la fibre optique (100) présente un diamètre de champ de mode dans la plage allant de 12 micromètres à 13 micromètres, dans laquelle la fibre optique (100) présente une atténuation allant jusqu'à 0,17 dB/km à une longueur d'onde de 1,550 nanomètres, dans laquelle la fibre optique (100) présente une dispersion chromatique dans la plage allant de 17 picosecondes par nanomètre-kilomètre à 23 picosecondes par nanomètre-kilomètre à une longueur d'onde de 1,550 nanomètres, dans laquelle la fibre optique (100) présente une surface efficace dans la plage allant de 110 micromètres carrés à 135 micromètres carrés, dans laquelle la fibre optique (100) présente une perte de macrocourbure allant jusqu'à 0,1 décibel pour 100 tours correspondant à une longueur d'onde de 1,625 nanomètres à un rayon de courbure de 30 millimètres et une perte de macrocourbure allant jusqu'à 0,03 décibel pour 100 tours correspondant à une longueur d'onde de 1,550 nanomètres à un rayon de courbure de 30 millimètres.

8. Fibre optique (100) selon la revendication 1, dans laquelle la région d'âme (102) est définie le long d'un axe longitudinal central (112) de la fibre optique (100).

9. Fibre optique (100) selon la revendication 1, comprenant en outre une troisième région de tranchée (114), dans laquelle la troisième région de tranchée (114) est adjacente à la région de tranchée secondaire (108), dans laquelle la troisième région de tranchée (114) présente un rayon r5, dans laquelle le rayon r5 de la troisième région de tranchée (114) est dans la plage allant de 38 micromètres à 42 micromètres.

10. Fibre optique (100) selon la revendication 1, comprenant en outre une région de gaine (110), dans laquelle la région de gaine (110) présente un rayon rclad, dans laquelle le rayon rclad de la région de gaine (110) va jusqu'à 62,5 micromètres, dans laquelle la région de gaine (110) présente un indice de réfraction relatif Δclad de 0.
